(19) Europäisches Patentamt

European Patent Office

Office européen des brevets

(11) **EP 1 398 927 B1**

(12) **EUROPÄISCHE PATENTSCHRIFT**

(45) Veröffentlichungstag und Bekanntmachung des Hinweises auf die Patenterteilung:
**03.08.2005 Patentblatt 2005/31**

(51) Int Cl.⁷: **H04L 25/03**, H04L 27/00, H04L 1/00

(21) Anmeldenummer: **02020259.4**

(22) Anmeldetag: **10.09.2002**

(54) **Verfahren zur Entzerrung zweier nach unterschiedlichen Funkübertragungsverfahren übertragener Signale und entsprechende Funkkommunikationssystem und Empfänger**

Method of equalising two signals transmitted with different radio transmission methods and corresponding radio communication system and receiver

Procédé d'égalisation de deux signaux transmis par des procédés de transmission radio différents et système de communication radio et récepteur associés

(84) Benannte Vertragsstaaten:
**DE FR GB IT**

(43) Veröffentlichungstag der Anmeldung:
**17.03.2004 Patentblatt 2004/12**

(73) Patentinhaber: SIEMENS
**AKTIENGESELLSCHAFT**
**80333 München (DE)**

(72) Erfinder:
• **Götze, Jürgen, Prof.**
**44229 Dortmund (DE)**

• **Sinn, Christian Vincent**
**44149 Dortmund (DE)**

(56) Entgegenhaltungen:
**WO-A-01/10046**          **US-A1- 2001 016 004**

• **FALCONER D. ET AL.: "FREQUENCY DOMAIN EQUALIZATION FOR SINGLE-CARRIER BROADBAND WIRELESS SYSTEMS" IEEE COMMUNICATIONS MAGAZINE, Bd. 40, Nr. 4, April 2002 (2002-04), Seiten 58-66, XP002231706 USA**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 398 927 B1

**Beschreibung**

Die Erfindung betrifft ein Verfahren zum Betrieb eines Funkkommunikationssystems, ein Funkkommunikationssystem und einen Empfänger für ein solches.

Ein wesentliches Problem bei der hochratigen Datenübertragung in Funkkommunikationssystemen ist das Auftreten von Intersymbolinterferenzen (ISI). Zur Verminderung der Interferenzeinflüsse wird häufig eine Kanalentzerrung, genauer eine Entzerrung der durch den Kanal verzerrten Signale, durchgeführt. Um hohe Datenraten zu ermöglichen, ist es nötig, die Kanalentzerrung möglichst effizient (das heißt nur wenig Rechenleistung benötigend) durchzuführen. Übertragungsverfahren, bei denen der Funkkanal effizient entzerrt wird, sind "Orthogonal Frequency Domain Multiplexing-" (OFDM-), "Cyclic Prefix based Single-Carrier-" (CP-SC-) und "Single-Carrier with Frequency Domain Equalization-" (SC-FDE-)Funkübertragungsverfahren. Bei den beiden erstgenannten Verfahren erfolgt eine Entzerrung der Empfangssignale durch Invertierung einer zyklischen Systemmatrix. Dabei ist die Kenntnis der Kanalparameter nötig, die durch eine Kanalschätzung erhalten werden. Bei SC-FDE handelt es sich um eine Entzerrung im Frequenzbereich durch ein FIR-(Finite Impulse Response-)Filter. Dies entspricht einer Multiplikation der Empfangsdaten mit einer Toeplitzmatrix. Zuvor ist eine Schätzung der Filterkoeffizienten nötig. Dazu kann z.B. ein LMS-, Block-LMS- oder RLS-Algorithmus verwendet werden (LMS: Least Mean Square, RLS: Recursive Least Square).

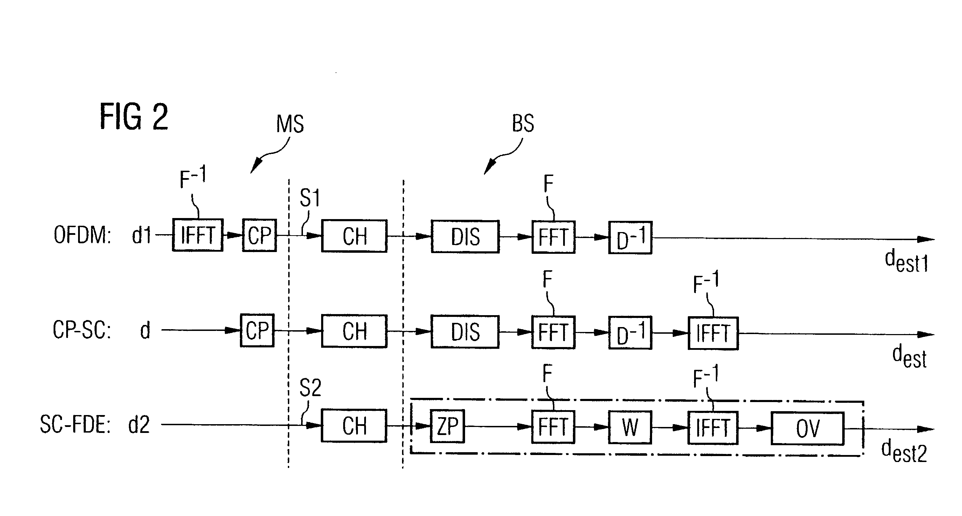

Synchrone, digitale Basisbanddarstellungen dieser drei Verfahren sind in Figur 2 zeilenweise dargestellt. Diese drei Verfahren sind zur hochratigen Datenübertragung über den Funkkanal geeignet. In Figur 2 ist links die Verarbeitung der zu sendenden Daten d1, d, d2 bei einem Sender MS, in der Mitte die Übertragung entsprechender Signale über einen Kanal CH und rechts die Verarbeitung in einem Empfänger BS dargestellt. Im Sender MS erfolgende Codierungsschritte und im Empfänger BS durchzuführende entsprechende Decodierungsschritte sind in Figur 2 nicht dargestellt.

Beim OFDM-Verfahren erfolgt senderseitig zunächst eine Inverse Fast Fourier Transformation (IFFT) $F^{-1}$. Anschließend werden die auf einer Vielzahl von Trägern zu übertragenden Symbole jeweils durch Schutzzeiten CP (Guard Periods) in Form von sogenannten Cylic Prefixes voneinander getrennt. Die Symbole werden empfängerseitig blockweise verarbeitet. Das OFDM-Verfahren ist ein Mehrträger-(Multi Carrier-) übertragungsverfahren. Beim CP-SC-Verfahren, das ein Einzelträger-(Single Carrier-)übertragungsverfahren ist, bei dem nur ein einzelner Träger zur Datenübertragung verwendet wird, entfällt senderseitig die IFFT. Trotzdem erfolgt eine Trennung der empfängerseitig blockweise zu verarbeitenden Blöcke, die aus jeweils mehreren Symbolen bestehen, durch eine senderseitig eingefügte Schutzzeit CP. Beim SC-FDE-Verfahren, das ebenfalls ein Einzelträger-Übertragungsverfahren ist, erfolgt senderseitig keine Einfügung von Schutzzeiten zwischen den Symbolen bzw. zwischen den im Empfänger einzeln zu verarbeitenden Blöcken und auch keine IFFT. Das Einfügen der Schutzzeiten CP bei den beiden erstgenannten Verfahren ermöglicht eine Entzerrung der Empfangssignale durch Verwendung geschätzter Kanalparameter, die in einer Kanalschätzung gewonnen werden. Beim SC-FDE erfolgt die Entzerrung dagegen durch ein Frequenzbereichsrealisierung eines FIR-Filters.

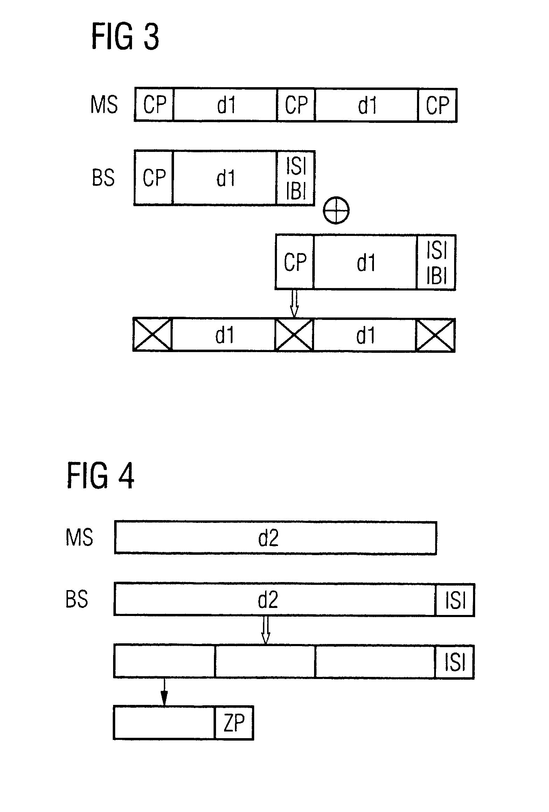

Bei einem OFDM-Übertragungssystem setzt sich ein Datenburst aus mehreren OFDM- Symbolen zusammen, die durch je eine Schutzzeit CP voneinander getrennt sind. Nach Durchlaufen des Echokanals liegen die verzerrten Symbole am Empfänger BS vor. Dies ist in Figur 3 dargestellt. Die erste Zeile der Figur 3 zeigt die vom Sender MS zu übertragenden Daten bzw. Symbole d1 mit den hinzugefügten Schutzzeiten CP. In der zweiten Zeile der Figur 3 sind die am Empfänger BS verzerrt empfangenen Daten dargestellt, bei denen aufgrund der Laufzeitverzerrungen ISI auftreten. Die ISI-freien Anteile eines OFDM-Symbols werden nun zur Datenschätzung weiterverarbeitet. Die anderen Teile werden verworfen (dritte Zeile der Figur 3, Block DIS in Figur 2). Der empfängerseitigen Verarbeitung liegt folgende algebraische Struktur zugrunde (siehe Figur 2): Zunächst erfolgt das Unterdrücken der ISI-behafteten Teile DIS, dann eine FFT (Fast Fourier Transformation) F eines empfangenen Datenblocks und dann folgt eine multiplikative Gewichtung $D^{-1}$ der Daten. In Matrixschreibweise lässt sich dies durch $\mathbf{d_{est}} = \mathbf{D^{-1}Fr}$ ausdrücken, wobei $d_{est}$ die geschätzten Daten sind, F die Fouriermatrix ist und D eine Diagonalmatrix ist, die für die genannte Gewichtung der Daten aufgrund einer Kanalschätzung gewonnene Kanalparameter im Frequenzbereich enthält. Der Empfangsvektor $\mathbf{r}$ enthält einen am Empfänger vorliegenden Datenblock. Die Verarbeitung der empfangenen Daten erfolgt blockweise.

Bei der CP-SC-Übertragung haben die gesendeten Symbolblöcke die gleiche Struktur wie ein OFDM-Symbol (Schutzzeit CP, Daten), so dass ebenfalls Figur 3 anwendbar ist. Allerdings ist nicht unbedingt zwischen jeweils zwei Symbolen eine Schutzzeit CP eingefügt, sondern die Schutzzeiten CP trennen einzelne Blöcke von in der Regel mehreren Symbolen, die empfangsseitig jeweils blockweise verarbeitet werden. Statt zu einer ISI kommt es zu einer IBI (Inter Block Interferenz). Die IBI-freien Anteile der Empfangsdaten werden dann zunächst genau wie bei OFDM-Systemen verarbeitet: Unterdrücken der Interferenzen IBI durch Verwerfen der entsprechenden Empfangssignalbestandteile, FFT des Datenblocks und multiplikative Gewichtung $D^{-1}$ mit identischen Gewichten wie bei OFDM. Anschließend wird der gewichtete Datenblock noch einer IFFT $F^{-1}$ zugeführt. In Matrixschreibweise lässt sich die Verarbeitung eines Blocks durch $\mathbf{d_{est}} = \mathbf{F^{-1}D^{-1}Fr}$ beschreiben. Die algebraische Struktur der Empfänger in OFDM- und CP-SC-Systemen unterscheidet sich daher lediglich durch eine weitere IFFT beim CP-SC-System.

Im SC-FDE-System (Figur 4) werden nicht alle empfangsseitig blockweise zu verarbeitenden Datenblöcke durch Schutzzeiten CP voneinander getrennt. Im Empfänger BS wird ein FIR-(Finite Impulse Response-)Filter zur Kanalentzerrung im Frequenzbereich unter Nutzung der Overlap Add/Save-Methode realisiert. Dazu werden die Empfangsdaten in Blöcke zerlegt (dritte Zeile der Figur 4) und mit Nullen ZP (Zero Pads) aufgefüllt (vierte Zeile der Figur 4). Diese mit Nullen ZP aufgefüllten Blöcke werden dann folgendermaßen verarbeitet (Figur 2, letzte Zeile): Genau wie bei CP-SC werden die Blöcke mittels FFT transformiert, anschließend multiplikativ gewichtet W und die gewichteten Daten wieder einer IFFT zugeführt. Die Ausgangsdaten werden dann nach dem Overlap Add/Save -Verfahren wieder zusammen gesetzt. In Matrixschreibweise wird ein mit Nullen aufgefüllter Datenblock $\mathbf{r_{ZP}}$ also folgendermaßen verarbeitet: $\mathbf{d_{est} = F^{-1}WFr_{ZP}}$, wobei W eine Diagonalmatrix ist, die Filterkoeffizienten des FIR-Filters im Frequenzbereich enthält. Patentanmeldung US 2001/0016004 offenbart einen Entzerrer für einen Empfänger unter Verwendung zweier Übertragungsverfahen.

Der Erfindung liegt die Aufgabe zugrunde, einen vorteilhaften Betrieb eines Funkkommunikationssystems zu ermöglichen.

Diese Aufgabe wird mit einem Verfahren gemäß Anspruch 1, einem Funkkommunikationssystem gemäß Anspruch 6 und einem Empfänger nach Anspruch 7 gelöst. Vorteilhafte Aus- und Weiterbildungen der Erfindung sind Gegenstand abhängiger Ansprüche.

Das erfindungsgemäße Verfahren zum Betrieb eines Funkkommunikationssystems mit wenigstens einem Sender und einem Empfänger sieht vor, dass

-   der Sender erste Signale nach einem ersten Funkübertragungsverfahren zum Empfänger überträgt, der Empfänger erste Parameter für die Durchführung einer Entzerrung der ersten Signale bestimmt,
-   der Sender zweite Signale nach einem zweiten Funkübertragungsverfahren zum Empfänger überträgt,
-   die für die Entzerrung der ersten Signale geschätzten Parameter in zweite Parameter für die Durchführung einer Entzerrung der zweiten Signale umgerechnet werden
-   und der Empfänger die zweiten Parameter für eine Entzerrung der zweiten Signale verwendet.

Die Erfindung ermöglicht somit für zwei Funkübertragungsverfahren, die für die Entzerrung der Empfangssignale nicht die Verwendung derselben Entzerrungsparameter zulassen, trotzdem während des Betriebs nach dem ersten Funkübertragungsverfahren ermittelte Parameter durch die erfindungsgemäße Umrechnung in Entzerrungsparameter des zweiten Funkübertragungsverfahrens in letzterem zu verwenden. Daher können vorteilhafter Weise die Ergebnisse der Ermittlung von Entzerrungsparametern, die im Betrieb nach dem ersten Funkübertragungsverfahren gewonnen wurden, für den Betrieb nach dem zweiten Funkübertragungsverfahren (nach entsprechender Umrechung bzw. Umwandlung) weiter verwendet werden. Es muss nach dem Wechsel zwischen den Funkübertragungsverfahren keine Bestimmung der zweiten Parameter durch unter Umständen aufwändige Untersuchung der Empfangssignale erfolgen, sondern sie können aus den ersten Parametern abgeleitet werden. Da das Umrechnen der Parameter in relativ kurzer Zeit möglich ist und bereits vor dem Umschalten vom ersten Funkübertragungsverfahren auf das zweite Funkübertragungsverfahren durchgeführt werden kann, kann die Datenübertragung nach dem Umschalten unmittelbar und ohne Verzögerung fortgesetzt bzw. neu aufgenommen werden.

Die Anwendung der Erfindung ist möglich beim Wechsel zwischen zwei Funkübertragungsverfahren in beliebigen Funkkommunikationssystemen, bei denen für die Enzerrung ermittelte erste Parameter des ersten Verfahrens nicht unmittelbar für die Entzerrung während des Betrieb nach dem zweiten Verfahren benutzt werden können, eine rechnerische Umwandlung bzw. Umrechnung zwischen den Parametern aber möglich ist.

Dies gilt insbesondere, wenn beim ersten oder beim zweiten Funkübertragungsverfahren senderseitig eine Schutzzeit zwischen allen empfangsseitig einzeln zu verarbeitenden Blöcken von Daten eingefügt wird und die entsprechenden Parameter für die Entzerrung Kanalparameter sind, die einer Schätzung des Kanals zwischen dem Sender und dem Empfänger entsprechen (wie beim eingangs erläuterten OFDM- und CP-SC-Verfahren), und beim anderen Funkübertragungsverfahren senderseitig keine Schutzzeit zwischen allen empfangsseitig zu verarbeitenden Blökken von Daten angeordnet sind und die entsprechenden Parameter Filterkoeffizienten eines FIR-Entzerrungsfilters sind (wie beim eingangs erläuterten SC-FDE-Verfahren). Hier ist eine einfache Umrechnung der Parameter des einen Übertragungsverfahrens in diejenigen des zweiten Übertragungsverfahrens und auch in umgekehrter Richtung möglich.

Es ist möglich, das Wechseln zwischen den Übertragungsverfahren während einer bestehenden Verbindung vorzunehmen, wenn sich beispielsweise die Übertragungsbedingungen ändern. Es ist auch möglich, lediglich die Bestimmung der ersten Parameter bei Beginn einer Verbindung vorzunehmen und sofort anschließend zum zweiten Übertragungsverfahren zu wechseln, wobei die zweiten Parameter von den ersten Parametern abgeleitet werden. Beispielsweise kann eine Kanalschätzung während des Betriebs nach dem ersten Übertragungsverfahren erfolgen und nach Ermitteln der entsprechenden ersten Parameter unmittelbar zum zweiten Übertragungsverfahren gewechselt werden, für das aus den ersten Parametern die zweiten Parameter abgeleitet werden. Ein Betrieb nach dem ersten Übertragungsverfahren erfolgt in einem solchen Fall also lediglich während einer Trainingsphase zur Bestimmung der ersten Parameter. Die ersten Signale entsprechen dann dem Empfänger bekannten Schätzsymbolen bzw. einer Traningssequenz.

Nach einer Weiterbildung der Erfindung wird der Wechsel zwischen den beiden Funkübertragungsverfahren in Abhängigkeit von Übertragungsbedingungen zwischen dem Sender und dem Empfänger durchgeführt. Bei sich verändernden Übertragungsbedingungen kann somit ein Übertragungsverfahren ausgewählt werden, was den neuen Übertragungsbedingungen am besten Rechnung trägt. Die einzelnen Übertragungsverfahren unterscheiden sich nämlich deutlich in ihren Eigenschaften.

Obwohl nämlich beispielsweise die algebraische Struktur der anhand Figur 2 erläuterten Übertragungsverfahren sehr ähnlich ist, unterscheiden sich ihre Leistungsmerkmale wesentlich. Unterschiede sind unter anderem: Die Notwendigkeit einer Schutzzeit CP bei OFDM und CP-SC, die in HiperLan/2 etwa 20% der gesamten benötigte Übertragungsdauer verursachen kann, die Notwendigkeit von Kodierung, die unterschiedliche BER (Bit Error Rate, Bitfehlerrate) bei starken Fading Einflüssen, die Möglichkeit von Pre- und Postequalization bei SC-FDE, die bei den anderen beiden Verfahren nicht gegeben ist, und die benötigte Rechenkomplexität im Empfänger, die bei SC-FDE höher ist als bei beispielsweise OFDM.

So kann beim Wechsel von OFDM bzw. CP-SC nach SC-FDE auf die Schutzzeit CP verzichtet werden. Dies bewirkt eine Erhöhung der Datenrate um bis zu 20%. Weiterhin kann mit SC-FDE unter bestimmten Umständen ein besseres Verhalten bei starken Fadingbedingungen erzielt werden.

Ein Wechsel von SC-FDE nach OFDM ermöglicht eine geringere Rechenkomplexität im Empfänger und einen höheren Rechenaufwand im Sender, da die Position der IFFT vom Empfänger zum Sender verschoben wird.

Abhängig von den jeweiligen Übertragungsbedingungen kann das Übertragungsverfahren unter wenigstens teilweiser Nutzung derselben Hardware gewechselt werden. Beispielsweise können die FFT und die IFFT bei den drei in Figur 2 dargestellten Verfahren durch dieselbe Hardware realisiert sein, die bei jedem der drei Verfahren genutzt werden kann.

Das erfindungsgemäße Funkkommunikationssystem und der erfindungsgemäße Empfänger weisen die für die Durchführung des Verfahrens notwendigen Komponenten auf.

Im Folgenden wird die Erfindung anhand eines in den Figuren dargestellten Ausführungsbeispiels näher erläutert.

Es zeigen:

Figur 1                 einen Ausschnitt eines erfindungsgemäßen Funkkommunikationssystems in Form eines Mobilfunksystems,

Figur 2                 Prinzipdarstellungen dreier unterschiedlicher Funkübertragungsverfahren nach dem Stand der Technik und

Figur 3 und Figur 4      die Verarbeitung von Signalen bei den Funkübertragungsverfahren aus Figur 2.

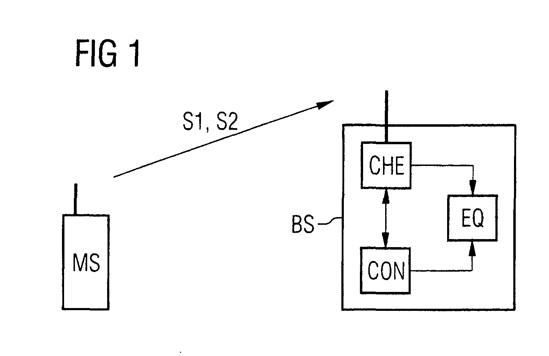

Figur 1 zeigt einen Sender MS in Form einer Mobilstation und einen Empfänger BS in Form einer Basisstation in einem Mobilfunksystem. Die Erfindung ist jedoch auch in beliebigen anderen Funkkommunikationssystemen anwendbar. Bei dem Mobilfunksystem aus Figur 1 kann es sich beispielsweise um ein zellulares System wie GSM (Global System for Mobile Communication) oder UMTS (Universal Mobile Telecommunications System) handeln. Die Erfindung ist jedoch auch auf nicht-zellulare Netze, wie zum Beispiel sogenannte selbstorganisierende bzw. ad-hoc-Netze anwendbar, bei denen die einzelnen Teilnehmer eine Relaisfunktion für Verbindungen der anderen Teilnehmer wahrnehmen und keine Basisstationen notwendig sind. Obwohl die Erfindung hier anhand einer Mobilstation als Sender MS und einer Basisstation als Empfänger BS erläutert wird, ist die Erfindung auch in umgekehrter Übertragungsrichtung anwendbar. Für jeweils eine Übertragungsrichtung ist jeweils eine andere der beiden Stationen Sender bzw. Empfänger, so dass die im Folgenden beschriebene Parameterbestimmung und Signalentzerrung in beiden Stationen stattfinden kann.

Beim Empfänger BS und beim Sender MS nach Figur 1 handelt es sich um Stationen mit zwei Betriebsarten, sogenannte dualmode Geräte. In der ersten Betriebsart können die Stationen nach dem HiperLan/2-Standard miteinander kommunizieren, der ein OFDM-Übertragungsverfahren vorsieht. In der zweiten Betriebsart kommunizieren Sender und Empfänger nach einem TDMA-Übertragungsverfahren wie beispielsweise beim GSM-Standard, und verwenden eine Entzerrung mittels eines FIR-Filters im Frequenzbereich. In der zweiten Betriebsart liegt somit ein SC-FDE-System vor.

Gemäß Figur 1 überträgt der Sender MS zunächst erste Signale S1 in der ersten Betriebsart zum Empfänger BS (die ersten Signale S1 und die später noch zu erläuternden zweiten Signale S2 sind auch in Figur 2 eingezeichnet). Der Empfänger BS weist eine Kanalschätzeinheit CHE auf, die zum Schätzen von Kanalparametern des Kanals CH zwischen dem Sender MS und dem Empfänger BS dient. Die Kanalschätzung erfolgt anhand von dem Empfänger BS bekannten Schätzsymbolen bzw. einer Traningssequenz, die mit den ersten Signalen S1 vom Sender MS übertragen werden. Die Kanalschätzeinheit CHE führt die Kanalparameter einer Entzerrungseinheit EQ zu, die diese zur Entzerrung der in der ersten Betriebsart nachfolgend zu übertragenden Daten d1 verwendet. Außerdem weist der Empfänger BS eine mit der Kanalschätzeinheit CHE verbundene Umrechnungseinheit CON auf, deren Funktion später noch erklärt wird. Die drei in Figur 1 dargestellten Komponenten des Empfängers BS können (ggf. auch nur teilweise) auch funktionell in einer Einheit integriert sein.

Zu einem bestimmten Zeitpunkt findet ein Wechsel von der ersten zur zweiten Betriebsart statt. Dies kann daran liegen, dass sich die Übertragungsbedingungen geändert haben und nach dem GSM-Verfahren eine ausreichende Verbindungsqualität zu erwarten ist, so dass auf eine Übertragung nach dem HiperLan/2-Verfahren mit seiner Nutzung einer Vielzahl von Trägern sowie der Einführung von Schutzzeiten CP zwischen allen Symbolen verzichtet werden kann. Durch Verzicht auf die Schutzzeiten CP kann die effektive Datenübertragungsrate des Systems gesteigert werden. In der zweiten Betriebsart übermittelt der Sender MS zweite Signale S2 zum Empfänger BS. Mittels seiner Umrechnungseinheit CON ermittelt der Empfänger BS aus den Kanalparametern, die während des Betriebs in der ersten Betriebsart gewonnen wurden, Filterkoeffizienten für ein FIR-Filter, das zur Entzerrung der zweiten Signale S2 in der zweiten Betriebsart dient. Hierzu wird von der Umrechnungseinheit CON die $D^{-1}$-Matrix des OFDM-Verfahrens in die W-Matrix des SC-FDE-Verfahrens umgerechnet, wie im Folgenden erläutert wird.

Ähnlich ist bei allen in Figur 2 dargestellten Verfahren auf der Empfängerseite die algebraische Struktur "FFT -> Multiplikation mit einer Diagonalmatrix $D^{-1}$, W -> IFFT". Die letzte IFFT entfällt bei OFDM. Die Verfahren unterscheiden sich bezüglich der Größe des Datenblocks, auf den die jeweilige Struktur angewendet wird, in den Werten der jeweiligen Diagonalmatrizen $D^{-1}$), W und der Art, wie die empfangenen Blöcke wieder zusammen gesetzt werden. Bei OFDM und CP-SC werden die verarbeiteten Datenblöcke einfach hintereinandergehängt, bei SC-FDE wird nach der Overlap Add/Save-Methode verfahren. Die Werte der Diagonalmatrizen $D^{-1}$ sind bei OFDM und CP-SC gleich. Sie unterscheiden sich aber von denen bei SC-FDE. Allerdings können die Parameter der einen Diagonalmatrix $D^{-1}$ in die der anderen Diagonalmatrix W umgerechnet werden (und umgekehrt), wie im Folgenden gezeigt wird.

Der Zero Forcing-Algorithmus eignet sich für eine Umrechung der FIR-Filterkoeffizienten g des SC-FDE-Verfahrens in die Kanalparameter h des OFDM- oder des CP-SC-Verfahrens und umgekehrt. Mit den Filterkoeffizienten g des Zeitbereichs wird eine Filtermatrix G gebildet, die eine Faltungsmatrix ist. Mit den Kanalparametern h des Zeitbereichs wird eine Kanalmatrix H gebildet, die ebenfalls eine Faltungsmatrix ist.

Hier wird zunächst die Umwandlung von $D^{-1}$ in W betrachtet. Die Faltung der Kanalmatrix H mit den Filterkoeffizienten g sollte einen Vektor p ergeben, der eine einzige Eins in beliebiger Position aufweist:

$$Hg = p$$

Das Gleichungssystem, dass hierdurch beschrieben ist, ist entweder überbestimmt oder hat genau eine Lösung. Für den Fall dass es überbestimmt ist, wird ein Fehlervektor $\delta(p)$ zum Vektor p addiert, so dass eine Näherungslösung durch Minimierung der Energie des Fehlers gefunden werden kann, wobei die Methode der kleinsten Fehlerquadrate (Least Square Criterion, LS) verwendet wird:

$$(1) \qquad Hg = p + \delta(p) \text{ mit } g \in C^{M}, H \in C^{(M+L-1) \times M},$$

wobei C die Menge der komplexen Zahlen darstellt. In diesem Fall ist die Größe der Kanalmatrix H abhängig von der Ordnung des Entzerrungsfilters M und der Länge der Kanalimpulsantwort L.

Als Ergebnis für die Schätzwerte $g'_{LS}$ der Filterkoeffizienten ergibt sich

$$(2) \qquad g'_{LS} = (H^{H}H)^{-1}H^{H}p,$$

wobei $H^{H}$ die hermitesche Matrix zur Kanalmatrix H ist und der Ausdruck vor dem Vektor p auf der rechten Seite der vorstehenden Gleichung die Pseudoinverse zur Kanalmatrix H ist.

Für die Umwandlung von W in $D^{-1}$ ergibt sich mit der Filtermatrix G entsprechend für die Schätzwerte der Kanalparameter

$$h'_{LS} = (G^{H}G)^{-1}G^{H}p.$$

Nach Durchführung einer FFT F eines mit Nullen aufgefüllten (ZP = Zero Pads) Kanalvektors h bzw. Filtervektors g werden die Parameter in die entsprechenden Diagonalmatrizen D und W transformiert:

$$(3) \qquad W = \text{diag}(Fg_{zp}), \ D = \text{diag}(Fh_{zp}).$$

Daher kann die W-Matrix in die D-Matrix umgerechnet werden und umgekehrt. $D^{-1}$ wird dabei als Inverse Matrix zu D aus dieser durch Invertierung gewonnen. Diese Invertierung entspricht der Invertierung der Diagonalelemente und ist daher einfach durchzuführen. Im Folgenden betrachten wir beispielhaft nur die Umrechnung bzw. Umwandlung der D- in die W-Matrix, entsprechend der Ermittlung der Schätzwerte der Filterkoeffizienten $g_{LS}$ aus den Kanalparametern h. Die Umwandlung der W- in die D-Matrix, entsprechend der Ermittlung der Schätzwerte der Kanalparameter $h_{LS}$ aus den Filterkoeffizienten g, kann auf analoge Weise erfolgen.

Eine sehr effiziente Lösung für die Umrechnung der Parameter sieht vor, die Kanalmatrix H zyklisch zu ergänzen, so dass man die Eigenwert-Zerlegung (Eigenvalue Decomposition, EVD) von zyklischen Matrizen vorteilhaft nutzen kann. Wenn der Vektor g der Filterkoeffizienten mit Nullen aufgefüllt wird, kann für jede Null eine beliebige Spalte auf der rechten Seite der Kanalmatrix H ergänzt werden, ohne dass die rechte Seite der oben erläuterten Gleichung (1) verändert wird. Daher eignet sich das Auffüllen des Vektors g mit Nullen zur Erzeugung einer zyklischen Kanalmatrix H'. Zyklische Matrizen können leicht invertiert werden. Daher ergibt sich aus Gleichung (1):

$$H'g_{ZP} = p + \delta(p) \text{ mit } g_{ZP} = [g^H \ 0^H]^H \text{ und } g_{ZP} \in C^{M+L-1}.$$

Das hochgestellte H bezeichnet auch hier wieder die hermitesche Notation des Vektors. Die Eigenwertzerlegung der zyklischen Kanalmatrix (wie auch jeder anderen zyklischen Matrix) ist durch die folgende Gleichung beschrieben:

$$H' = F^{-1}DF, \ D = \text{diag}(FH'(:, 1)),$$

wobei (:,1) die erste Spalte der zyklischen Matrix H' bezeichnet.

Die Filterkoeffizienten können nun wie folgt geschätzt werden:

$$g'_{ZP} = H'^{-1}p = F^{-1}D^{-1}Fp = [g'^H \ s'^H]^H,$$

wobei $s'^H$ ein Maß für die Qualität der Schätzung ist. $F^{-1}$ ist eine IFFT. Setzt man $s'^H$ gleich Null, erhält man die W-Matrix aus

$$W = \text{diag}(F[g'^H \ 0^H]^H).$$

Das bedeutet, man kann die Schätzwerte der Filterkoeffizienten g', die in ihrer Frequenzbereichsdarstellung in der W-Matrix des SC-FDE-Verfahrens enthalten sind, aus den Kanalparametern h, die in ihrer Frequenzbereichsdarstellung in der D-Matrix bzw. in ihrer Zeitbereichsdarstellung in der Kanalmatrix H des OFDM- oder CP-SC-Verahrens enthalten sind, berechnen. Die D-Matrix kann auf diese Weise in die W-Matrix umgerechnet werden. Für die Umwandlung der W-Matrix in die D-Matrix gilt Entsprechendes.

**Patentansprüche**

1. Verfahren zum Betrieb eines Funkkommunikationssystems mit wenigstens einem Sender (MS) und einem Empfänger BS), bei dem

   - der Sender (MS) erste Signale (S1) nach einem ersten Funkübertragungsverfahren (OFDM) zum Empfänger (BS) überträgt,
   - der Empfänger (BS) erste Parameter für die Durchführung einer Entzerrung der ersten Signale (S1) bestimmt,
   - der Sender (MS) zweite Signale (S2) nach einem zweiten Funkübertragungsverfahren (SC-FDE) zum Empfänger überträgt, **dadurch gekennzeichnet, dass**

- die für die Entzerrung der ersten Signale (S1) geschätzten Parameter in zweite Parameter für die Durchführung einer Entzerrung der zweiten Signale (S2) umgerechnet werden
- und der Empfänger (BS) die zweiten Parameter für eine Entzerrung der zweiten Signale (S2) verwendet.

**2.** Verfahren nach Anspruch 1, bei dem

- beim ersten oder beim zweiten Funkübertragungsverfahren (OFDM) senderseitig eine Schutzzeit (CP) zwischen allen empfangsseitig einzeln zu verarbeitenden Blöcken von Daten (d1) eingefügt wird und die entsprechenden Parameter für die Entzerrung Kanalparameter sind, die einer Schätzung des Kanals (CH) zwischen dem Sender (MS) und dem Empfänger (BS) entsprechen,
- und beim anderen Funkübertragungsverfahren (SC-FDE) senderseitig keine Schutzzeit zwischen allen empfangsseitig zu verarbeitenden Blöcken von Daten (d2) angeordnet sind und die entsprechenden Parameter Filterkoeffizienten eines FIR-Entzerrungsfilters sind.

**3.** Verfahren nach einem der vorstehenden Ansprüche, bei dem der Wechsel zwischen den beiden Funkübertragungsverfahren (OFDM, SC-FDE) in Abhängigkeit von Übertragungsbedingungen zwischen dem Sender (MS) und dem Empfänger (BS) durchgeführt wird.

**4.** Verfahren nach einem der vorstehenden Ansprüche, bei dem das erste (OFDM) oder das zweite Funkübertragungsverfahren (SC-FDE) ein Mehrträger-Übertragungsverfahren und das andere Funkübertragungsverfahren ein Einträger-Übertragungsverfahren ist.

**5.** Verfahren nach Anspruch 4, bei dem das Mehrträger-Übertragungsverfahren ein OFDM-(Orthogonal Frequency Domain Multiplexing-)Verfahren ist.

**6.** Funkkommunikationssystem

- mit einem Sender (MS) und einem Empfänger (BS), die jeweils nach einem ersten und nach einem zweiten Funkübertragungsverfahren (OFDM, SC-FDE) betreibbar sind,
- dessen Empfänger (BS) eine Schätzeinheit (CHE) aufweist zum Bestimmen von ersten Parametern für die Durchführung einer Entzerrung von zwischen dem Sender und dem Empfänger nach dem ersten Funkübertragungsverfahren (OFDM) übertragenen ersten Signalen (S1), **dadurch gekennzeichnet, dass**
- dessen Empfänger (BS) eine Umrechnungseinheit (CON) aufweist zum Umrechnen der anhand der ersten Signale (S1) ermittelten ersten Parameter in zweite Parameter für eine Entzerrung von nach dem zweiten Funkübertragungsverfahren (SC-FDE) übertragenen zweiten Signalen (S2)
- und dessen Empfänger eine Entzerrungseinheit (EQ) aufweist zum Entzerren der zweiten Signale (S2) unter Verwendung der zweiten Parameter.

**7.** Empfänger (BS) für ein Funkkommunikationssystem

- der nach einem ersten und nach einem zweiten Funkübertragungsverfahren (OFDM, SC-FDE) betreibbar ist,
- der eine Schätzeinheit (CHE) aufweist zum Bestimmen von ersten Parametern für die Durchführung einer Entzerrung von zwischen einem Sender und dem Empfänger nach dem ersten Funkübertragungsverfahren (OFDM) übertragenen ersten Signalen (S1), **dadurch gekennzeichnet, dass**
- der eine Umrechnungseinheit (CON) aufweist zum Umrechnen der anhand der ersten Signale (S1) ermittelten ersten Parameter in zweite Parameter für eine Entzerrung von nach dem zweiten Funkübertragungsverfahren (SC-FDE) übertragenen zweiten Signalen (S2)
- und der eine Entzerrungseinheit (EQ) aufweist zum Entzerren der zweiten Signale (S2) unter Verwendung der zweiten Parameter.

**Claims**

**1.** Method for operating a radio communication system having at least one transmitter (MS) and one receiver (BS), where in

- the transmitter (MS) transmits first signals (S1) to the receiver (BS) according to a first radio transmission method (OFDM),

- the receiver (BS) determines first parameters for performing an equalizing of the first signals (S1),
- the transmitter (MS) transmits second signals (S2) to the receiver in accordance with a second radio transmission method (SC-FDE), **characterised in that**
- the parameters estimated for equalizing the first signals (S1) are converted into second parameters for performing an equalizing of the second signals (S2)
- and the receiver (BS) uses the second parameters for equalizing the second signals (S2).

2. Method according to claim 1, wherein

- with the first or second radio transmission method (OFDM) a guard period (CP) is inserted at the transmitter end between all the blocks of data (d1) to be processed individually at the receiver end and the corresponding parameters for the equalizing are channel parameters that correspond to an estimation of the channel (CH) between the transmitter (MS) and the receiver (BS),
- and with the other radio transmission method (SC -FDE) there is no guard period arranged at the transmitter end between all the blocks of data (d2) to be processed at the receiver end and the corresponding parameters are filter coefficients of an FIR equalizing filter.

3. Method according to one of the preceding claims, where in the change between the two radio transmission methods (OFDM, SC -FDE) is carried out as a function of transmission conditions between the transmitter (MS) and the receiver (BS).

4. Method according to one of the preceding claims, with the first (OFDM) or second radio transmission method (SC-FDE) being a multi-carrier transmission method and the other radio transmission method being a single-carrier transmission method.

5. Method according to claim 4, whereby
the multi-carrier transmission method is an orthogonal frequency domain multiplexing (OFDM) method.

6. Radio communication system

- having a transmitter (MS) and a receiver (BS) each of which can be operated in accordance with a first or second radio transmission method (OFDM, SC -FDE),
- whose receiver (BS) has an estimation unit (CHE) for determining first parameters for performing an equalizing of the first signals (S1) transmitted between the transmitter and the receiver in accordance with the first radio transmission method (OFDM), character ised in that
- its receiver (BS) has a conversion unit (CON) for converting the first parameters determined using the first signals (S1) to second parameters for an equalizing of second signals transmitted in accordance with the second radio transmission method (SC-FDE)
- and whose receiver has an equalizing unit (EQ) for equalizing the second signals (S2) using the second parameters.

7. Receiver (BS) for a radio communication system

- which can be operated in accordance with a first and a second radio transmission method (OFDM, SC -FDE),
- which has an estimation unit (CHE) for determining first parameters for performing an equalizing of the first signals (S1) transmitted between a transmitter and receiver in accordance with the first radio transmission method (OFDM),

  **characterised in that**

- it has a conversion unit (CON) for converting the first parameters obtained using the first signals (S1) into second parameters for an equalizing of the second signals (S2) transmitted in accordance with the second radio transmission method (SC-FDE)
- and which has an equalizing unit (EQ) for equalizing the second signals (S2) using the second parameters.

**Revendications**

1. Procédé pour faire fonctionner un système de radiocommunication comprenant au moins un émetteur (MS) et un récepteur (BS), dans lequel

   - l'émetteur (MS) transmet des premiers signaux (S1) au récepteur (BS) selon un premier procédé de transmission radio (OFDM),
   - le récepteur (BS) détermine des premiers paramètres pour opérer une égalisation des premiers signaux (S1),
   - l'émetteur (MS) transmet des deuxièmes signaux (S2) au récepteur selon
          un deuxième procédé de transmission radio (SC-FDE),

   **caractérisé en ce que**

   - les paramètres estimés pour l'égalisation des premiers signaux (S1) sont convertis en deuxièmes paramètres pour opérer une égalisation des deuxièmes signaux (S2) et
   - le récepteur (BS) utilise les deuxièmes paramètres pour une égalisation des deuxièmes signaux (S2).

2. Procédé selon la revendication 1, dans lequel

   - dans le premier ou dans le deuxième procédé de transmission radio (OFDM), côté émetteur, une période de garde (CP) est insérée entre tous les blocs de données (d1) à traiter séparément côté récepteur et les paramètres correspondants pour l'égalisation sont des paramètres de canal qui correspondent à une estimation du canal (CH) entre l'émetteur (MS) et le récepteur (BS) et
   - dans l'autre procédé de transmission radio (SC-FDE), côté émetteur, il n'y a pas de période de garde située entre tous les blocs de données (d2) à traiter côté récepteur et les paramètres correspondants sont des coefficients de filtre d'un filtre d'égalisation FIR.

3. Procédé selon l'une des revendications précédentes, dans lequel le passage entre les deux procédés de transmission radio (OFDM, SC-FDE) est opéré en fonction des conditions de transmission entre l'émetteur (MS) et le récepteur (BS).

4. Procédé selon l'une des revendications précédentes, dans lequel le premier procédé de transmission radio (OFDM) ou le deuxième procédé de transmission radio (SC-FDE) est un procédé de transmission multi-porteuses et l'autre procédé de transmission radio est un procédé de transmission monoporteuse.

5. Procédé selon la revendication 4, dans lequel le procédé de transmission multi-porteuses est un procédé OFDM (Orthogonal Frequency Domain Multiplexing).

6. Système de radiocommunication

   - comprenant un émetteur (MS) et un récepteur (BS) que l'on peut faire fonctionner respectivement selon un premier et selon un deuxième procédé de transmission radio (OFDM, SC-FDE),
   - dont le récepteur (BS) comporte une unité d'estimation (CHE) pour déterminer des premiers paramètres pour opérer une égalisation de premiers signaux (S1) transmis entre l'émetteur et le récepteur selon le premier procédé de transmission radio (OFDM), **caractérisé en ce que**
   - son récepteur (BS) comporte une unité de conversion (CON) pour convertir les premiers paramètres déterminés à l'aide des premiers signaux (S1) en deuxièmes paramètres pour une égalisation de deuxièmes signaux (S2) transmis selon le deuxième procédé de transmission radio (SC-FDE) et
   - dont le récepteur comporte une unité d'égalisation (EQ) pour égaliser les deuxièmes signaux (S2) en utilisant les deuxièmes paramètres.

7. Récepteur (BS) pour un système de radiocommunication

   - que l'on peut faire fonctionner selon un premier et selon un deuxième procédé de transmission radio (OFDM, SC-FDE),
   - qui comporte une unité d'estimation (CHE) pour déterminer des premiers paramètres pour opérer une égalisation de premiers signaux (S1) transmis entre l'émetteur et le récepteur selon le premier procédé de transmission radio (OFDM), **caractérisé en ce que**

- il comporte une unité de conversion (CON) pour convertir les premiers paramètres déterminés à l'aide des premiers signaux (S1) en deuxièmes paramètres pour une égalisation de deuxièmes signaux (S2) transmis selon le deuxième procédé de transmission radio (SC-FDE) et
- qui comporte une unité d'égalisation (EQ) pour égaliser les deuxièmes signaux (S2) en utilisant les deuxièmes paramètres.

FIG 1

FIG 2

MS

BS

$F^{-1}$

$F$

OFDM: d1 —[ IFFT ]→[ CP ]| S1 |→[ CH ]→[ DIS ]→[ FFT ]→[ $D^{-1}$ ]————————→

$d_{est1}$

$F$

$F^{-1}$

CP-SC: d ————→[ CP ]→[ CH ]→[ DIS ]→[ FFT ]→[ $D^{-1}$ ]→[ IFFT ]————→

$d_{est}$

$F$

$F^{-1}$

S2

SC-FDE: d2 ————| |→[ CH ]→[ ZP ]→[ FFT ]→[ W ]→[ IFFT ]→[ OV ]→

$d_{est2}$

## FIG 3

MS | CP | d1 | CP | d1 | CP |

BS | CP | d1 | ISI IBI |

⊕

| CP | d1 | ISI IBI |

| ⊠ | d1 | ⊠ | d1 | ⊠ |

## FIG 4

MS | d2 |

BS | d2 | ISI |

| | | | ISI |

| | ZP |